# EUROPEAN PATENT SPECIFICATION

(11) **EP 3 865 963 B1**
(45) Date of publication and mention of the grant of the patent: **22.10.2025**
(21) Application number: 21156584.1
(22) Date of filing: 11.02.2021
(51) Int. Cl.: G05B 23/02, G07C 5/08

(54) **METHOD AND DEVICE FOR ANALYZING VEHICLE FAILURE**
VERFAHREN UND VORRICHTUNG ZUR ANALYSE VON FAHRZEUGFEHLERN
MÉTHODE ET DISPOSITIF D'ANALYSE D'UNE PANNE DE VÉHICULE

(30) Priority: 14.02.2020 CN 202010092170; 14.02.2020 CN 202010095177; 14.02.2020 CN 202010092191
(43) Date of publication of application: 18.08.2021
(73) Proprietor: Mobility Asia Smart Technology Co. Ltd., Beijing (CN); Volkswagen Automatic Transmission (Dalian) Co., Ltd., Liaoning Province (CN)
(72) Inventor: YU, Shangshang, Beijing (CN); PERRY, Shang, Beijing (CN); PLOETNER, Artur, 38018 Braunschweig (DE); GU, Feng, Beijing (CN)
(74) Representative: v. Bezold & Partner Patentanwälte - PartG mbB

(56) References cited:
- US-A1- 2010 023 307
- US-A1- 2017 161 965
- US-A1- 2017 178 426
- US-A1- 2017 206 718
- US-A1- 2019 101 908
- LIPING HUANG ET AL: "Text Mining with Application to Engineering Diagnostics", 1 January 2006, ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 1309 -, ISBN: 978-3-642-17318-9, XP019035121
- WU SHUN: "Short Text Mining for Fault Diagnosis of Railway System Based on Multi-Granularity Topic Model", 2018 8TH INTERNATIONAL CONFERENCE ON LOGISTICS, INFORMATICS AND SERVICE SCIENCES (LISS), IEEE, 3 August 2018 (2018-08-03), pages 1 - 6, XP033485264, DOI: 10.1109/LISS.2018.8593228

## Description

### Technical Field

The disclosure relates to a method and a device for analyzing vehicle faults.

### Background

At present, vehicles have become an essential means of transportation for people to travel. With the improvement of performances of existing vehicles, structures thereof are increasingly complex, and accordingly the difficulty of diagnosing vehicle faults is also increased. Conventional vehicle fault diagnosis methods mainly include manual diagnosis methods and equipment diagnosis methods. Due to various types and causes of current vehicle faults, regardless of whether the manual diagnosis methods or the equipment diagnosis methods are used, it is time-consuming and not accurate enough to diagnose vehicle faults. Examples of conventional vehicle diagnosis and fault prediction techniques are disclosed in US 2017/206718 A1, US 2017/161965 A1, US 2017/178426 A1 and US 2010/023307 A1.

Therefore, in order to ensure driving safety, when vehicle faults occur, it is desirable to quickly and accurately determine causes of the faults and/or the probability of each cause of the faults, so as to facilitate maintenance personnel to quickly and accurately eliminate the faults.

### Summary

According to the present invention, a method and a device for analyzing vehicle faults are provided as defined in the independent claims. Preferred embodiments of the invention result from the dependent claims.

The content of the disclosure is provided to introduce a set of concepts that will be further described in the following specific implementation modes. The content of the disclosure is neither intended to identify key features or essential features of the protected subject matter, nor intended to be used to limit the scope of the protected subject matter.

The disclosure is intended to provide a method and a device for analyzing vehicle faults, to at least partially overcome defects of the conventional art, so that causes of the faults may be quickly located and accurate diagnosis results may be obtained. In addition, through the method for analyzing vehicle faults according to the disclosure, by feeding back accurate diagnosis results for the faults to manufacturers, a reference may be provided for evaluation of a feasible range of production parameters.

Embodiments of the disclosure provide a method and a device for analyzing vehicle faults. The method includes: receiving fault information to be diagnosed; obtaining, from a database, predetermined characteristics related to a fault to be diagnosed, which is indicated in the fault information to be diagnosed; processing, by a fault analysis model, the fault information to be diagnosed and the predetermined characteristics, wherein the fault analysis model is a preferred model determined by training a fusion model using historical fault data and historical fault related characteristics based on a classification algorithm; and generating a fault diagnosis result for the fault to be diagnosed.

The embodiments of the disclosure further provide a device for analyzing vehicle faults. The device includes: a receiving module configured to receive fault information to be diagnosed; an obtaining module configured to obtain, from a database, predetermined characteristics related to a fault to be diagnosed, which is indicated in the fault information to be diagnosed; a processing module configured to process, by a fault analysis model, the fault information to be diagnosed and the predetermined characteristics, wherein the fault analysis model is a preferred model determined by training a fusion model using historical fault data and historical fault related characteristics based on a classification algorithm; and a generating module configured to generate a fault diagnosis result for the fault to be diagnosed.

The embodiments of the disclosure provide a method and a device for analyzing vehicle faults. The method includes: receiving fault information to be diagnosed; obtaining, from a database, predetermined characteristics related to a fault to be diagnosed, which is indicated in the fault information to be diagnosed; processing, by a fault analysis model, the fault information to be diagnosed and the predetermined characteristics, wherein the fault analysis model is a preferred model determined by training a deep neural network model using historical fault data and historical fault related characteristics based on a classification algorithm; and generating a fault diagnosis result for the fault to be diagnosed.

The embodiments of the disclosure further provide a device for analyzing vehicle faults. The device includes: a receiving module configured to receive fault information to be diagnosed; an obtaining module configured to obtain, from a database, predetermined characteristics related to a fault to be diagnosed, which is indicated in the fault information to be diagnosed; a processing module configured to process, by a fault analysis model, the fault information to be diagnosed and the predetermined characteristics, wherein the fault analysis model is a preferred model determined by training a deep neural network model using historical fault data and historical fault related characteristics based on a classification algorithm; and a generating module configured to generate a fault diagnosis result for the fault to be diagnosed.

The embodiments of the disclosure provide a method and a device for analyzing vehicle faults. The method includes: receiving fault information to be diagnosed; obtaining, from a database, predetermined characteristics related to a fault to be diagnosed, which is indicated in the fault information to be diagnosed; processing, by a fault analysis model, the fault information to be diagnosed and the predetermined characteristics, wherein the fault analysis model is a preferred model determined by training a model for classification, using historical fault data and historical fault related characteristics; and generating a fault diagnosis result for the fault to be diagnosed.

The embodiments of the disclosure further provide a device for analyzing vehicle faults. The device includes: a receiving module configured to receive fault information to be diagnosed; an obtaining module configured to obtain, from a database, predetermined characteristics related to a fault to be diagnosed, which is indicated in the fault information to be diagnosed; a processing module configured to process, by a fault analysis model, the fault information to be diagnosed and the predetermined characteristics, wherein the fault analysis model is a preferred model determined by training a model for classification, using historical fault data and historical fault related characteristics; and a generating module configured to generate a fault diagnosis result for the fault to be diagnosed.

An apparatus for analyzing vehicle faults according to the embodiments of the disclosure includes a processor; and a memory configured to store an executable instruction, and the executable instruction, when executed, causes the processor to perform the foregoing method.

A machine-readable medium according to the embodiments of the disclosure has an executable instruction stored thereon, and the executable instruction, when executed, causes a machine to perform the foregoing method.

It is to be noted that one or more of the above aspects include the following detailed descriptions and the features specified in the claims. The following descriptions and accompanying drawings describe certain illustrative features of the one or more aspects in detail. These features merely indicate various ways in which principles of the various aspects may be implemented, and the content of the disclosure is intended to include all these aspects and their equivalent variations.

### Brief Description of the Drawings

The various aspects of the disclosure will be described below with reference to the accompanying drawings. The accompanying drawings are provided to illustrate rather than limit the various aspects of the disclosure.
FIG. 1 illustrates a schematic structural diagram of a system for analyzing vehicle faults according to an embodiment of the disclosure;
FIG. 2 illustrates a schematic diagram of an exemplary training process for a fault analysis model according to an embodiment of the disclosure;
FIG. 3 illustrates a schematic flowchart of training a machine learning fusion model and using the trained preferred model to analyze vehicle faults according to an embodiment of the disclosure;
FIG. 4 illustrates a schematic flowchart of a method for analyzing vehicle faults according to an embodiment of the disclosure;
FIG. 5 illustrates a schematic diagram of a device for analyzing vehicle faults according to an embodiment of the disclosure;
FIG. 6 illustrates a schematic diagram of an exemplary training process for a fault analysis model according to another embodiment of the disclosure;
FIG. 7 illustrates a schematic flowchart of training a deep neural network model and using the trained preferred model to analyze vehicle faults according to another embodiment of the disclosure;
FIG. 8 illustrates a schematic flowchart of a method for analyzing vehicle faults according to another embodiment of the disclosure;
FIG. 9 illustrates a schematic diagram of a device for analyzing vehicle faults according to another embodiment of the disclosure;
FIG. 10 illustrates a schematic diagram of an exemplary training process for a fault analysis model according to another embodiment of the disclosure;
FIG. 11 illustrates a schematic flowchart of training an XGBoost model for classification and using the trained preferred model to analyze vehicle faults according to another embodiment of the disclosure;
FIG. 12 illustrates a schematic flowchart of a method for analyzing vehicle faults according to another embodiment of the disclosure;
FIG. 13 illustrates a device for analyzing vehicle faults according to another embodiment of the disclosure; and
FIG. 14 illustrates a schematic diagram of an apparatus for analyzing vehicle faults according to embodiments of the disclosure.

### Detailed Description of the Embodiments

The content of the disclosure will now be discussed with reference to various exemplary implementation modes. It is to be understood that the discussion of the implementation modes is only used to enable those skilled in the art to better understand and thus implement the embodiments of the content of the disclosure, and does not teach any limitation on the scope of the content of the disclosure.

The embodiments of the disclosure each will be described below in combination with the accompanying drawings in detail.

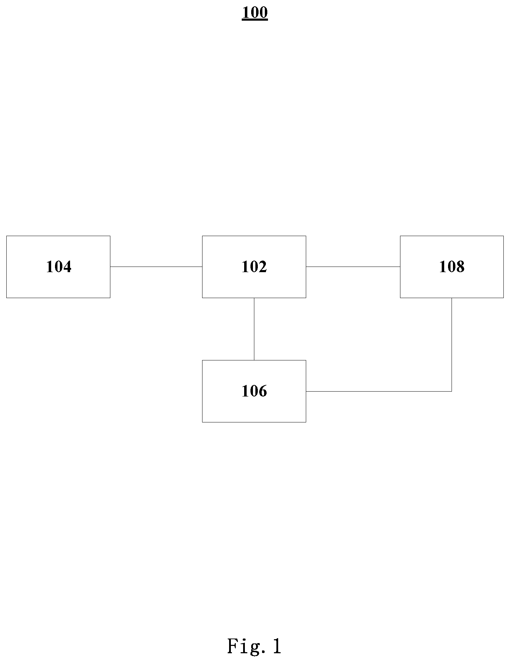

FIG. 1 illustrates a schematic structural diagram of a system 100 for analyzing vehicle faults according to an embodiment of the disclosure. As illustrated in FIG. 1, the exemplary system 100 for analyzing vehicle faults may include a fault analysis model 102, an input port 104, a database 106, and an output port 108.

In some embodiments, the fault analysis model 102 may receive fault information to be diagnosed from the input port 104. According to the invention, the fault information to be diagnosed refers to information related to a fault of a vehicle, which includes, but is not limited to time, place, and specific fault performance of the fault, such as failure in vehicle starting, engine flameout, and big noise of vehicle. The fault information to be diagnosed may be provided in a text form. In some examples, the fault information to be diagnosed may be obtained in one or more of the following ways: being detected by a vehicle system, being detected by an external sensor of the vehicle and sent to the vehicle system or a cloud database, and manually record or input, or in any other suitable information acquisition ways. The fault analysis model 102 may obtain, from a database 106, predetermined characteristics related to the fault to be diagnosed, which is indicated in the fault information to be diagnosed. For example, the fault to be diagnosed is indicated by the specific fault performance in the fault information to be diagnosed. In some examples, the fault analysis model 102 may convert the fault information to be diagnosed, which is in a text form, into a vector form by a Term Frequency-Inverse Document Frequency (TF-IDF) method, and classify a fault to be diagnosed, which is indicated in the fault information to be diagnosed, based on a Bidirectional Encoder Representations from Transformers (BERT) model. For example, a classification result may include, but is not limited to any one or more of the following: a fault of oil leakage, a problem of a transmission control unit, vehicle jitter, vehicle screaming noise, a clutch fault, a problem of a valve body, and the like. According to the invention, based on the classification result of the fault to be diagnosed, the fault analysis model 102 obtains from the database 106, predetermined characteristics or parameters related to the classification result, for example, high-dimensional data matched with or corresponding to the classification result, which includes, but is not limited to production process parameters and part parameters after assembly, such as production year or production date, mileage, driving distance in kilometers after assembly of a transmission, pump temperature, tolerance time of a clutch under current temperature, oil pressure, and transmission chip data read from the transmission. In some examples, the production process parameters represent parameters on workstations, such as part torque, lubricant osmotic pressure, part force direction, moment of force, and temperature. The part parameters after assembly may include, but are not limited to the following: speed, mileage, clutch temperature, pressure, loss, and the like.

The received fault information to be diagnosed and the obtained predetermined characteristics are used as input to be provided to the fault analysis model 102, for subsequent processing or analysis. The fault analysis model 102 is used to process the fault information to be diagnosed and the predetermined characteristics to generate a diagnosis result for the fault to be diagnosed. The fault diagnosis result may be provided to the output port 108, to be output to a user or displayed on a display. In some examples, the fault diagnosis result may include, but is not limited to any one or more of the following: result characteristics related to the fault to be diagnosed, result characteristics related to a category of the fault to be diagnosed, at least one cause of the fault to be diagnosed, and a probability of each cause of the fault. In some examples, each fault corresponds to at least one cause. For example, causes of a fault of upshift abnormal sound include, but are not limited to the following: an electrical fault of an internal temperature sensor, and limited functions of a sensor caused by pressure drop; causes of failing of trip stop in shift include, but are not limited to the following: exceeding gear oil temperature, failing to synchronously start, and the like. For example, if the classification result of the fault to be diagnosed is "oil leakage", the fault diagnosis result may be: result characteristics [production year and mileage], and causes of the fault and probabilities of the causes [seal failure 50%, falling off of clamp nuts 10%, valve blockage 15%, fuel tank damage 5%, oil pipe breaking 10%, structural design defects 5%, and improper installation 5%]. It is to be understood that the specific characteristics, fault causes, and probability values herein are all exemplary. In actual applications, any suitable result characteristics, fault causes, and the probability of each cause may exist or be generated.

The fault diagnosis result may be provided to the database 106 from the output port 108, so as to be stored in the database 106, or in a training stage, may be provided to a model to retrain the model.

It is to be understood that components or modules illustrated in FIG. 1 are only exemplary. In actual applications, one or more components may be added or removed as required. In addition, the components each included in the system 100 may be in wireless or wired connection in any mode.

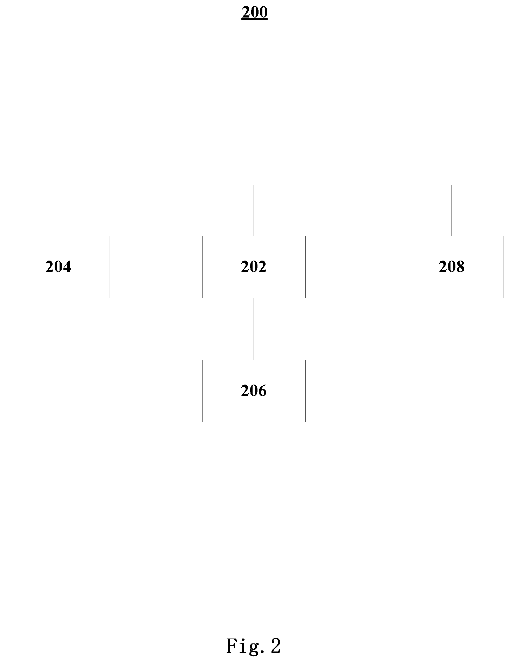

FIG. 2 illustrates a schematic diagram of an exemplary training process 200 for the fault analysis model 102 according to an embodiment of the disclosure. A preferred model is determined by training a fusion model 202 that includes at least one model, and the preferred model is used as a fault analysis model in a fault analysis process. In some embodiments, the fusion model 202 includes a random forest model, an AdaBoost model, and a Support Vector Machine (SVM) model.

As illustrated in FIG. 2, the fusion model 202 obtains historical fault information and historical fault related characteristics from a database 204. The fusion model 202 processes the historical fault information and the historical fault related characteristics to generate a predicted diagnosis result for a historical fault indicated in the historical fault information. In addition, the fusion model 202 obtains a detected real result, for the fault, from a detection or diagnosis system 206, and compares the real result with the predicted diagnosis result to determine a deviation between the two. If the deviation between the predicted result and the real result is less than a threshold by adjusting a parameter and/or a parameter value of the fault related characteristics, the parameter is determined as a preferred parameter, and a model using the preferred parameter is determined as a preferred model. The preferred model is used as the fault analysis model 102 in the fault analysis process. Optionally, the preferred parameter may be output to the fusion model 202 through an output port 208, so that the fusion model 202 may be retrained with updated parameter in a subsequent training process.

In some examples, a historical diagnosis real result obtained by analyzing or detecting the historical fault through the detection or diagnosis system, and the historical fault information together may be merged into historical fault data, to be stored in the database 204.

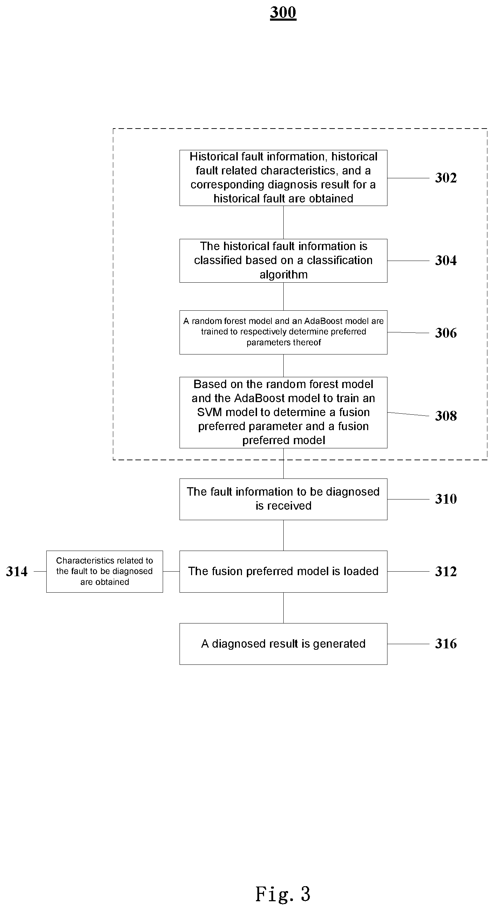

A specific training process, for the fusion model 202, will be illustrated below with reference to a dotted box in FIG. 3.

FIG. 3 illustrates a schematic flowchart 300 of training a machine learning fusion model and using the trained preferred model to analyze vehicle faults according to an embodiment of the disclosure. In the embodiment, operations 302, 304, 306, and 308 in the dotted box refer to a training process of a fault analysis model, and operations 310, 312, 314, and 316 refer to a process of using the trained preferred model to process a fault to be diagnosed so as to generate a diagnosis result.

As illustrated in FIG. 3, in block 302, historical fault information, historical fault related characteristics, and a diagnosis result corresponding to a historical fault indicated in the historical fault information are obtained. The above information may be obtained from a database.

In block 304, the historical fault information is classified based on a classification algorithm. In some examples, the historical fault information is subjected to text classification by the BERT algorithm for classification, to obtain a classification result for the historical fault indicated in the historical fault information. In some embodiments, the classification result may include, but is not limited to a fault of oil leakage, a fault of a transmission control unit, vehicle jitter, vehicle screaming, a clutch fault, a problem of a valve body, and the like.

In block 306, a random forest model and an AdaBoost model may be trained based on the classification result of the fault information, the fault related characteristics, and the diagnosis result for the fault. For example, different categories of fault information, high-dimensional data related to the fault (production year or production date, mileage, driving distance in kilometers after assembly of a transmission, pump temperature, tolerance time of a clutch under current temperature, oil pressure, and other characteristics), and the diagnosis result are used as input of the above models, and sampling is performed by a cross validation method to respectively train the random forest model and the AdaBoost model, so that a preferred parameter of the random forest model and a preferred parameter of the AdaBoost model are respectively determined.

In block 308, a fusion model may be used, particularly, the random forest model and the AdaBoost model may be used as base models to train an SVM model so as to determine a fusion preferred parameter and a fusion preferred model. The preferred model obtained by the above training mode may be used in the subsequent fault diagnosis and analysis process, as illustrated in the following blocks 310-316. In some examples, results of the random forest model using the preferred parameter and the AdaBoost model using the preferred parameter may be input to the SVM model to retrain the SVM so as to obtain a preferred parameter of the SVM model. Further, based on the preferred parameter of the random forest model, the preferred parameter of the AdaBoost model, and the preferred parameter of the SVM model, the fusion preferred parameter may be determined, and a fusion model using the fusion preferred parameter is used as a preferred model or a fault analysis model.

In block 310, the fault information to be diagnosed is received, and the fault information to be diagnosed may be in a text form. In some examples, the fault information to be diagnosed may be used as input to be provided to the preferred model.

In block 312, the preferred model is loaded as the fault analysis model. Characteristics related to the fault to be diagnosed, which is indicated in the fault information to be diagnosed, are used as input of the preferred model. In some examples, the characteristics related to the fault to be diagnosed may include, but are not limited to production process parameters, part parameters after assembly, and the like.

In block 316, based on processing of the preferred model, a diagnosis result corresponding to a category of the fault is generated. The fault diagnosis result may include, but is not limited to any one or more of the following: result characteristics related to the fault to be diagnosed, at least one cause of the fault to be diagnosed, and a probability of each cause of the fault.

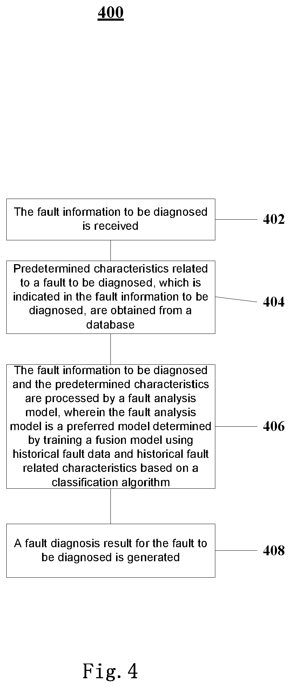

FIG. 4 illustrates an exemplary process 400 of analyzing vehicle faults according to an embodiment of the disclosure.

In block 402, fault information to be diagnosed may be received. In some examples, the fault information to be diagnosed may be in a text form.

In block 404, predetermined characteristics related to a fault to be diagnosed, which is indicated in the fault information to be diagnosed, are obtained from a database. In some examples, the predetermined characteristics related to the fault to be diagnosed may be represented with high-dimensional data or parameters, for example, may be represented with parameters including characteristics such as production date and mileage.

In block 406, the fault information to be diagnosed and the predetermined characteristics are processed by a fault analysis model. The fault analysis model is a preferred model determined by training a fusion model using historical fault data and historical fault related characteristics based on a classification algorithm, as described above with reference to the training process in FIG. 2 or FIG. 3. In some examples, the historical fault data includes historical fault information and/or corresponding diagnosis results. In some examples, the classification algorithm may be the BERT algorithm.

In block 408, a fault diagnosis result for the fault to be diagnosed is generated. The fault diagnosis result includes at least one of the following: result characteristics related to the fault to be diagnosed, at least one cause of the fault to be diagnosed, and a probability of each cause.

In some embodiments, the fault analysis model is further determined by the following operations: obtaining the historical fault data and the historical fault related characteristics, the historical fault data including historical fault information and corresponding historical diagnosis results; using the classification algorithm to perform text classification on the historical fault information to obtain different categories of historical fault information; based on the different categories of historical fault information, the historical fault related characteristics, and the historical diagnosis results, training the fusion model to obtain a fusion preferred parameter for the fusion model; and selecting the fusion preferred model using the fusion preferred parameter as the fault analysis model.

In further embodiments, the fusion model includes a random forest model, an AdaBoost model, and an SVM model. The operation of training the fusion model further includes the following operations: based on the different categories of historical fault information, the historical fault related characteristics, and the historical diagnosis results, training the random forest model and the AdaBoost model to respectively determine a preferred parameter for the random forest model and a preferred parameter for the AdaBoost model; using the random forest model and the AdaBoost model that respectively use the determined preferred parameters as base models to train the SVM model to determine a preferred parameter for the SVM model; and based on the preferred parameter of the random forest model, the preferred parameter of the AdaBoost model, and the preferred parameter of the SVM model, determining the fusion preferred parameter.

Optionally, the method 400 further includes storing the fault diagnosis result in the database and/or providing the fault diagnosis result to the fusion model to retrain the fusion model. In some embodiments, the operation of providing the fault diagnosis result to the fusion model to retrain the fusion model further includes: providing to the fusion model the result characteristics as updated historical fault related characteristics so as to retrain the fusion model.

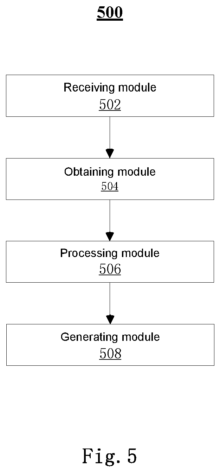

FIG. 5 illustrates a schematic diagram of a device 500 for analyzing vehicle faults according to an embodiment of the disclosure. The device 500 as illustrated in FIG. 5 may be implemented by means of software, hardware, or a combination of software and hardware.

As illustrated in FIG. 5, the device 500 may include a receiving module 502, an obtaining module 504, a processing module, and a generating module 508.

The receiving module 502 may be configured to receive fault information to be diagnosed. In some examples, the fault information to be diagnosed may be in a text form.

The obtaining module 504 may be configured to obtain, from a database, predetermined characteristics related to a fault to be diagnosed, which is indicated in the fault information to be diagnosed.

The processing module 506 may be configured to process, by a fault analysis model, the fault information to be diagnosed and the predetermined characteristics. The fault analysis model is a preferred model determined by training a fusion model using historical fault data and historical fault related characteristics based on a classification algorithm. In some examples, the classification algorithm may be the BERT algorithm. In some examples, the historical fault data includes historical fault information and corresponding diagnosis results.

The generating module 508 may be configured to generate a fault diagnosis result for the fault to be diagnosed. In some examples, the fault diagnosis result includes at least one of the following: result characteristics related to the fault to be diagnosed, at least one cause of the fault to be diagnosed, and a probability of each cause.

In addition, optionally, the device 500 may further include a storing module configured to store the fault diagnosis result in the database. Optionally or alternatively, the device 500 may further include a providing module configured to provide the fault diagnosis result to the fusion model to retrain the fusion model.

Further, the providing module is further configured to provide to the fusion model the result characteristics as updated historical fault related characteristics so as to retrain the fusion model.

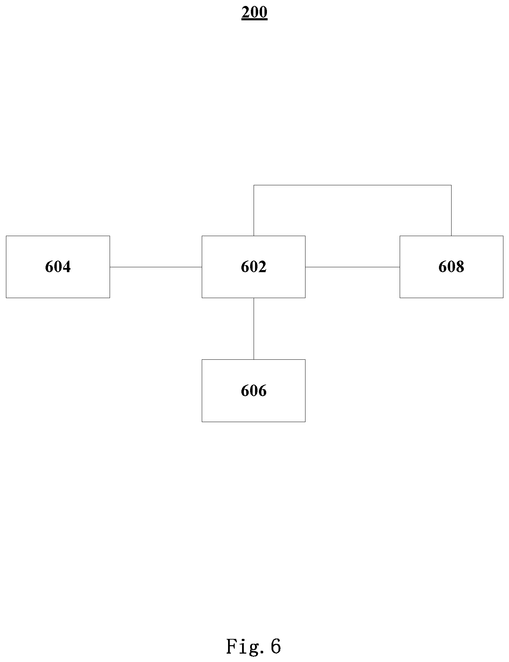

FIG. 6 illustrates a schematic diagram of an exemplary training process 600 for the fault analysis model 102 according to another embodiment of the disclosure. A preferred model is determined by training a deep neural network model 602, and the preferred model is used as a fault analysis model in the fault analysis process.

As illustrated in FIG. 6, the deep neural network model 602 obtains historical fault information and historical fault related characteristics from a database 604. The deep neural network model 602 processes the historical fault information and the historical fault related characteristics to generate a predicted diagnosis result for a historical fault indicated in the historical fault information. In addition, the deep neural network model 602 obtains a detected real result, for the fault, from a detection or diagnosis system 606, and compares the real result with the predicted diagnosis result to determine a deviation between the two. If the deviation between the predicted result and the real result is less than a threshold by adjusting a parameter and/or a parameter value of the fault related characteristics, the parameter is determined as a preferred parameter, and a model using the preferred parameter is determined as a preferred model. The preferred model may be used as the fault analysis model 102 in the fault analysis process. Optionally, the preferred parameter may be output to the deep neural network model 602 through an output port 608, so that the deep neural network model 602 may be retrained with updated parameter in a subsequent training process.

In some examples, a historical diagnosis real result obtained by analyzing or detecting the historical fault through the detection or diagnosis system and the historical fault information together may be merged into historical fault data so as to be stored in a database 604.

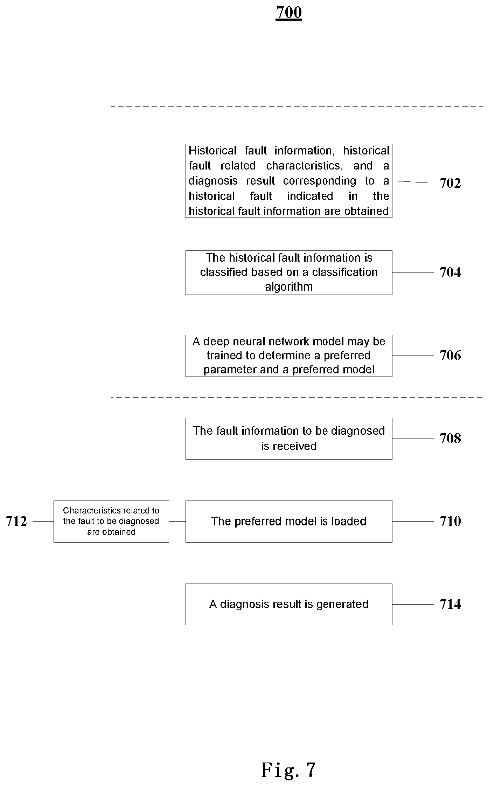

A specific training process, for the deep neural network model 602, will be illustrated below with reference to a dotted box in FIG. 7.

FIG. 7 illustrates a schematic flowchart 700 of training a deep neutral network model and using the trained preferred model to analyze vehicle faults according to another embodiment of the disclosure. In this embodiment, operations 702, 704, and 706 in the dotted box refer to a training process of a fault analysis model, and operations 708, 710, 712, and 714 refer to a process of using the trained preferred model to process the fault to be diagnosed so as to generate a diagnosis result.

As illustrated in FIG. 7, in block 702, historical fault information, historical fault related characteristics, and a diagnosis result corresponding to a historical fault indicated in the historical fault information are obtained. The above information may be obtained from a database.

In block 704, the historical fault information may be classified based on a classification algorithm. In some examples, the historical fault information is subjected to text classification by the BERT algorithm for classification, to obtain a classification result for the historical fault indicated in the historical fault information. In some embodiments, the classification result may include, but is not limited to a fault of oil leakage, a fault of a transmission control unit, vehicle jitter, vehicle screaming, a clutch fault, a problem of a valve body, and the like.

In block 706, a deep neural network model may be trained based on the classification result of the fault information, the fault related characteristics, and the diagnosis result for the fault. For example, different categories of fault information, high-dimensional data related to the fault (production year or production date, mileage, driving distance in kilometers after assembly of a transmission, pump temperature, tolerance time of a clutch under current temperature, oil pressure, and other characteristics), and the diagnosis result are used as input of the above models, and sampling is performed by a cross validation method to train the deep neural network model, so that a preferred parameter of the deep neural network model is determined, and the deep neural network model using the preferred parameter is used as a preferred model or a fault analysis model.

In block 708, the fault information to be diagnosed is received, and the fault information to be diagnosed may be in a text form. In some examples, the fault information to be diagnosed is used as input to be provided to the preferred model.

In block 710, the preferred model is loaded as the fault analysis model. Characteristics, obtained from block 712, related to the fault to be diagnosed, which is indicated in the fault information to be diagnosed, are used as input of the preferred model. In some examples, the characteristics related to the fault to be diagnosed may include, but are not limited to production process parameters, part parameters after assembly, and the like.

In block 714, based on processing of the preferred model, a diagnosis result corresponding to a category of the fault is generated. The fault diagnosis result may include, but is not limited to any one or more of the following: result characteristics related to the fault to be diagnosed, at least one cause of the fault to be diagnosed, and a probability of each cause of the fault.

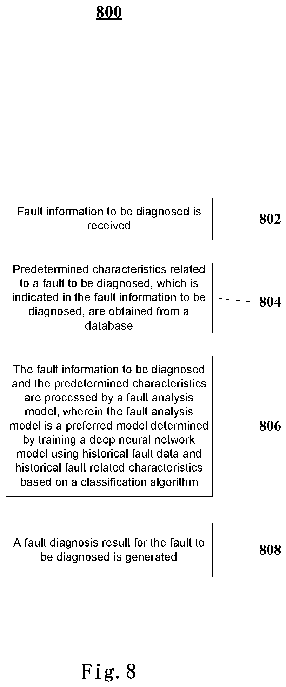

FIG. 8 illustrates an exemplary process 800 of analyzing vehicle faults according to another embodiment of the disclosure.

In block 802, fault information to be diagnosed may be received. In some examples, the fault information to be diagnosed may be in a text form.

In block 804, predetermined characteristics related to a fault to be diagnosed, which is indicated in the fault information to be diagnosed, are obtained from a database. In some examples, the predetermined characteristics related to the fault to be diagnosed may be represented with high-dimensional data or parameters, for example, may be represented with parameters including characteristics such as production date and mileage.

In block 806, the fault information to be diagnosed and the predetermined characteristics are processed by a fault analysis model, wherein the fault analysis model is a preferred model determined by training a deep neural network model using historical fault data and historical fault related characteristics based on a classification algorithm, as described above with reference to the training process in FIG. 6 or FIG. 7. In some examples, the classification algorithm may be the BERT algorithm. In some examples, the historical fault data includes historical fault information and corresponding diagnosis results.

In block 808, a fault diagnosis result for the fault to be diagnosed is generated. The fault diagnosis result includes at least one of the following: result characteristics related to the fault to be diagnosed, at least one cause of the fault to be diagnosed, and a probability of each cause.

In some embodiments, the fault analysis model is further determined by the following operations: obtaining the historical fault data and the historical fault related characteristics, the historical fault data including historical fault information and corresponding historical diagnosis results; using the classification algorithm to perform text classification on the historical fault information to obtain different categories of historical fault information; based on the different categories of historical fault information, the historical fault related characteristics, and the historical diagnosis results, training the deep neural network model to determine a preferred parameter for the deep neural network model; and selecting the preferred model using the preferred parameter as the fault analysis model.

Optionally, the method 800 may further include storing the fault diagnosis result in the database and/or providing the fault diagnosis result to the deep neural network model to retrain the deep neural network model. In some embodiments, the operation of providing the fault diagnosis result to the deep neural network model to retrain the deep neural network model further includes: providing to the deep neural network model the result characteristics as updated historical fault related characteristics so as to retrain the deep neural network model.

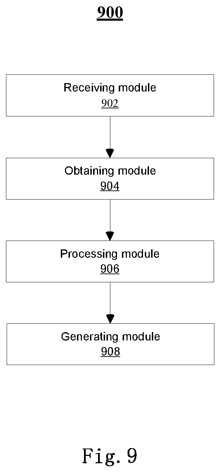

FIG. 9 illustrates a schematic diagram of a device 900 for analyzing vehicle faults according to another embodiment of the disclosure. The device 900 as illustrated in FIG. 9 may be implemented by means of software, hardware, or a combination of software and hardware.

As illustrated in FIG. 9, the device 900 may include a receiving module 902, an obtaining module 904, a processing module 906, and a generating module 908.

The receiving module 902 may be configured to receive fault information to be diagnosed. In some examples, the fault information to be diagnosed may be in a text form.

The obtaining module 904 may be configured to obtain, from a database, predetermined characteristics related to a fault to be diagnosed, which is indicated in the fault information to be diagnosed.

The processing module 906 may be configured to process, by a fault analysis model, the fault information to be diagnosed and the predetermined characteristics. The fault analysis model is a preferred model determined by training a deep neural network model using historical fault data and historical fault related characteristics based on a classification algorithm. In some examples, the classification algorithm is the BERT algorithm. In some examples, the historical fault data includes historical fault information and corresponding diagnosis results.

The generating module 908 may be configured to generate a fault diagnosis result for the fault to be diagnosed. In some examples, the fault diagnosis result includes at least one of the following: result characteristics related to the fault to be diagnosed, at least one cause of the fault to be diagnosed, and a probability of each cause.

In addition, optionally, the device 900 may further include a storing module configured to store the fault diagnosis result in the database. Optionally or alternatively, the device 900 may further include a providing module configured to provide the fault diagnosis result to the deep neural network model to retrain the deep neural network model.

Further, the providing module is further configured to provide to the deep neural network model the result characteristics as updated historical fault related characteristics so as to retrain the deep neural network model.

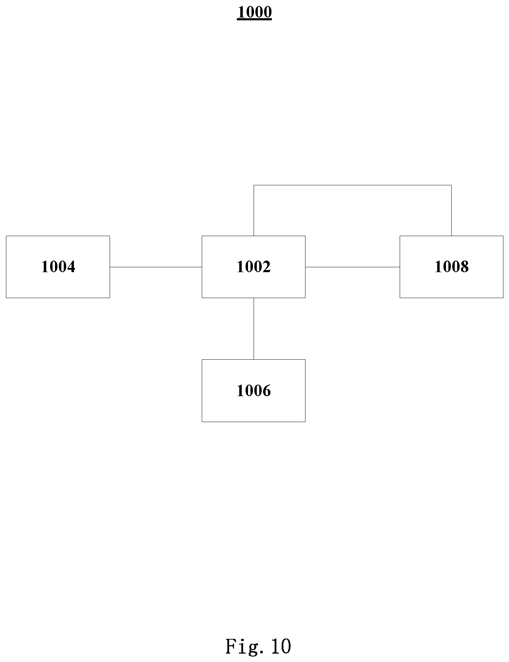

FIG. 10 illustrates a schematic diagram of an exemplary training process 1000 for the fault analysis model 102 according to another embodiment of the disclosure. A preferred model is determined by training a model 1002 for classification, such as an XGBoost model, and the preferred model is used as a fault analysis model in the fault analysis process.

As illustrated in FIG. 10, the XGBoost model 1002 obtains historical fault information and historical fault related characteristics from a database 1004. The XGBoost model 1002 processes the historical fault information and the historical fault related characteristics to generate a predicted diagnosis result for a historical fault indicated in the historical fault information. In addition, the XGBoost 1002 obtains a detected real result, for the fault, from a detection or diagnosis system 1006, and compares the real result with the predicted diagnosis result to determine a deviation between the two. If the deviation between the predicted result and the real result is less than a threshold by adjusting a parameter and/or a parameter value of the fault related characteristics, the parameter is determined as a preferred parameter, and a model using the preferred parameter is determined as a preferred model. The preferred model may be used as the fault analysis model 102 in the fault analysis process. Optionally, the preferred parameter may be output to the XGBoost model 1002 through an output port 1008, so that the XGBoost 1002 may be retrained with updated parameter in a subsequent training process.

In some examples, a historical diagnosis real result obtained by analyzing or detecting the historical fault through the detection or diagnosis system and the historical fault information together may be merged into historical fault data so as to be stored in a database 1004.

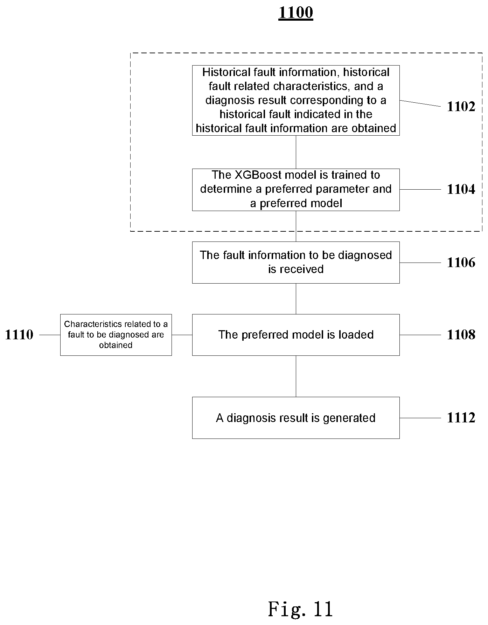

A specific training process, for the model 1002 for classification, such as the XGBoost model, will be illustrated below with reference to a dotted box in FIG. 11.

FIG. 11 illustrates a schematic flowchart 1100 of training a model for classification, such as an XGBoost model, and using the trained preferred model to analyze vehicle faults according to an embodiment of the disclosure. In this embodiment, operations 1102 and 1104 in the dotted box refer to a training process of a fault analysis model, and operations 1106, 1108, 1110, and 1112 refer to a process of using the trained preferred model to process the fault to be diagnosed to generate a diagnosis result.

As illustrated in FIG. 11, in block 1102, historical fault information, historical fault related characteristics, and a diagnosis result corresponding to a historical fault indicated in the historical fault information are obtained. The above information may be obtained from a database.

In block 1104, the XGBoost model may be trained using the obtained historical fault information, the fault related characteristics, and the diagnosis result for the fault. For example, fault information, high-dimensional data related to the fault (production year or production date, mileage, driving distance in kilometers after assembly of a transmission, pump temperature, tolerance time of a clutch under current temperature, oil pressure, and other characteristics), and the diagnosis result are used as input of the above models, and sampling is performed by a cross validation method to train the XGBoost model, so that a preferred parameter of the XGBoost model is determined, and the XGBoost model using the preferred parameter is used as a preferred model or a fault analysis model.

In block 1106, the fault information to be diagnosed is received, and the fault information to be diagnosed may be in a text form. In some examples, the fault information to be diagnosed is used as input to be provided to the preferred model.

In block 1108, the preferred model is loaded as the fault analysis model. Characteristics, obtained from block 1110, related to the fault to be diagnosed, which is indicated in the fault information to be diagnosed, are used as input of the preferred model. In some examples, the characteristics related to the fault to be diagnosed may include, but are not limited to production process parameters, part parameters after assembly, and the like.

In block 1112, based on processing of the preferred model, a diagnosis result corresponding to a category of the fault is generated. The fault diagnosis result may include, but is not limited to any one or more of the following: result characteristics related to the category of the fault to be diagnosed, at least one cause of the fault to be diagnosed, and a probability of each cause of the fault.

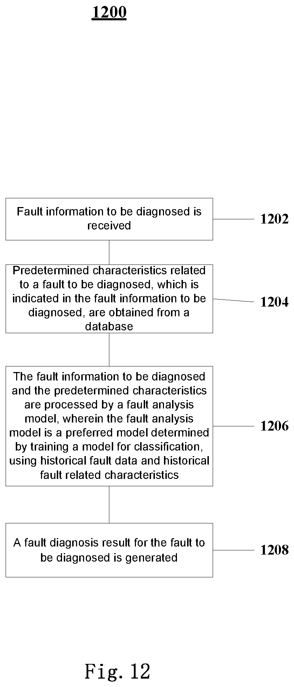

FIG. 12 illustrates an exemplary process 1200 of analyzing vehicle faults according to another embodiment of the disclosure.

In block 1202, fault information to be diagnosed may be received. In some examples, the fault information to be diagnosed may be in a text form.

In block 1204, predetermined characteristics related to a fault to be diagnosed, which is indicated in the fault information to be diagnosed, are obtained from a database. In some examples, the predetermined characteristics related to the fault to be diagnosed may be represented with high-dimensional data or parameters, for example, may be represented with parameters including characteristics such as production date and mileage.

In block 1206, the fault information to be diagnosed and the predetermined characteristics are processed by a fault analysis model, wherein the fault analysis model is a preferred model determined by training a model for classification, using historical fault data and historical fault related characteristics, as described above with reference to the training process in FIG. 10 or FIG. 11. In some examples, the model for classification is the XGBoost model. In some examples, the historical fault data includes historical fault information and corresponding diagnosis results.

In block 1208, a fault diagnosis result for the fault to be diagnosed is generated. The fault diagnosis result includes at least one of the following: result characteristics related to a category of the fault to be diagnosed, at least one cause of the fault to be diagnosed, and a probability of each cause.

In some embodiments, the fault analysis model is further determined by the following operations: obtaining the historical fault data and the historical fault related characteristics, the historical fault data including historical fault information and corresponding historical diagnosis results; using the historical fault information, the historical fault related characteristics, and the historical diagnosis results to train the model for classification, so as to determine a preferred parameter for the model for classification; and selecting the preferred model using the preferred parameter as the fault analysis model.

Optionally, the method 1200 may further include storing the fault diagnosis result in the database and/or providing the fault diagnosis result to the XGBoost model to retrain the XGBoost model. In some embodiments, the operation of providing the fault diagnosis result to the XGBoost model to retrain the XGBoost model further includes: providing to the XGBoost model the result characteristics as updated historical fault related characteristics so as to retrain the XGBoost model.

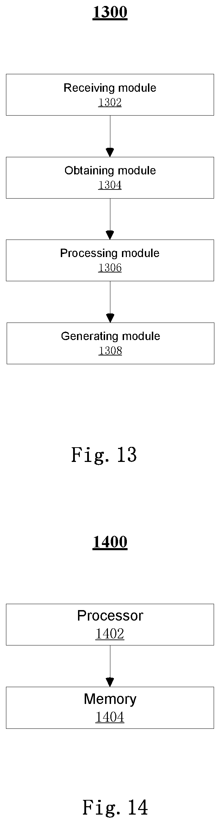

FIG. 13 illustrates a schematic diagram of a device 1300 for analyzing vehicle faults according to an embodiment of the disclosure. The device 1300 as illustrated in FIG. 13 may be implemented by means of software, hardware, or a combination of software and hardware.

As illustrated in FIG. 13, the device 1300 may include a receiving module 1302, an obtaining module 1304, a processing module 1306, and a generating module 1308.

The receiving module 1302 may be configured to receive fault information to be diagnosed. In some examples, the fault information to be diagnosed may be in a text form.

The obtaining module 1304 may be configured to obtain, from a database, predetermined characteristics related to a fault to be diagnosed, which is indicated in the fault information to be diagnosed.

The processing module 1306 may be configured to process, by a fault analysis model, the fault information to be diagnosed and the predetermined characteristics. The fault analysis model is a preferred model determined by training a model for classification, using historical fault data and historical fault related characteristics. In some examples, the model for classification is the XGBoost model, and the historical fault data includes historical fault information and corresponding diagnosis results.

The generating module 1308 may be configured to generate a fault diagnosis result for the fault to be diagnosed. In some examples, the fault diagnosis result includes at least one of the following: result characteristics related to a category of the fault to be diagnosed, at least one cause of the fault to be diagnosed, and a probability of each cause.

In addition, optionally, the device 1300 may further include a storing module configured to store the fault diagnosis result in the database. Optionally or alternatively, the device 1300 may further include a providing module configured to provide the fault diagnosis result to the XGBoost model to retrain the XGBoost model.

Further, the providing module is further configured to provide to the XGBoost model the result characteristics as updated historical fault related characteristics so as to retrain the XGBoost model.

FIG. 14 illustrates a schematic diagram of an apparatus 1400 for analyzing vehicle faults according to embodiments of the disclosure.

As illustrated in FIG. 14, the apparatus 1400 may include a processor 1402 and a memory 1404. The memory 1404 is configured to store an executable instruction. When executed, the executable instruction causes the processor 1402 to perform the method illustrated in FIG. 3 to FIG. 4 or FIG. 7 to FIG. 8 or FIG. 11 to FIG. 12.

The embodiments of the claimed invention further provide a machine-readable medium with an executable instruction stored thereon. The executable instruction, when executed, causes a machine to perform the method illustrated in FIG. 3 to FIG. 4 or FIG. 7 to FIG. 8 or FIG. 11 to FIG. 12.

It is also to be understood that all the modules in the devices as covered by the claims and as described above may be implemented in various ways. These modules may be implemented as hardware, software, or a combination thereof. In addition, any of the modules may be further functionally divided into a sub-module or may be combined together.

The processor has been described in conjunction with various devices and methods. These processors may be implemented using electronic hardware, computer software, or any combination thereof. Whether these processors are implemented as hardware or software will depend on the specific application and the overall design constraint imposed on the system. As an example, the processor, any part of the processor, or any combination of the processors, given in the disclosure, may be implemented as a microprocessor, microcontroller, a Digital Signal Processor (DSP), a Field Programmable Gate Array (FPGA), a Programmable Logic Device (PLD), a state machine, a gate logic device, a discrete hardware circuit, and other suitable processing components configured to perform the various functions described in this disclosure. Functions of the processor, any part of the processor, or any combination of the processors provided in the disclosure may be implemented as software executed by the microprocessor, the microcontroller, the DSP, or other suitable platforms.

## Claims

1. A method for analyzing vehicle faults (1200), comprising:
receiving fault information to be diagnosed (1202), wherein the fault information to be diagnosed refers to information related to a fault to be diagnosed when a vehicle occurs fault;
obtaining, from a database, predetermined parameters corresponding to a classification result of a fault to be diagnosed (1204), which is indicated in the fault information to be diagnosed;
processing, by a fault analysis model, the fault information to be diagnosed and the predetermined parameters, wherein the fault analysis model is a preferred model determined by training a model for classification using historical fault data and historical fault related characteristics based on a classification algorithm, the method being **characterized in that** the
preferred model is determined by: determining a parameter, when a deviation between a predicted result generated for a historical fault in the historical fault data and a diagnosis real result detected for the historical fault is less than a threshold, as a preferred parameter, and determining a model using the preferred parameter as the preferred model; and
generating a fault diagnosis result for the fault to be diagnosed (1208).

2. The method according to claim 1, wherein the model for classification is a fusion model, the fusion model comprising a random forest model, an AdaBoost model, and a Support Vector Machine (SVM) model, and wherein the fault analysis model is further determined based on the following operations:
obtaining the historical fault data and the historical fault related characteristics (302), the historical fault data comprising historical fault information and corresponding historical diagnosis results;
performing, by the classification algorithm, text classification on the historical fault information to obtain different categories of historical fault information (304);
based on the different categories of historical fault information, the historical fault related characteristics, and the historical diagnosis results, training the fusion model to obtain a preferred parameter for the fusion model; and
selecting a fusion preferred model using the preferred parameter, as the fault analysis model.

3. The method according to claim 2, wherein the classification algorithm is a Bidirectional Encoder Representations from Transformers (BERT) algorithm and wherein training the fusion model further comprises the following operations:
based on the different categories of historical fault information, the historical fault related characteristics, and the historical diagnosis results, training the random forest model and the AdaBoost model to respectively determine a preferred parameter for the random forest model and a preferred parameter for the AdaBoost model (306);
with the random forest model and the AdaBoost model that respectively use the determined preferred parameters as base models, training the SVM model to determine a preferred parameter for the SVM model; and
based on the preferred parameter of the random forest model, the preferred parameter of the AdaBoost model, and the preferred parameter of the SVM model, determining the preferred parameter for the fusion model (308.

4. The method according to claim 2, wherein the fault diagnosis result comprises at least one of the following: result characteristics related to the fault to be diagnosed, at least one cause of the fault to be diagnosed, and a probability of each cause.

5. The method according to claim 4, further comprising:
storing the fault diagnosis result in the database and/or providing the fault diagnosis result to the fusion model to retrain the fusion model.

6. The method according to claim 5, wherein the operation of providing the fault diagnosis result to the fusion model to retrain the fusion model further comprises: providing to the fusion model the result characteristics as updated historical fault related characteristics so as to retrain the fusion model.

7. The method according to claim 1, wherein the model for classification is a deep neural network model, and wherein the fault analysis model is further determined based on the following operations:
obtaining the historical fault data and the historical fault related characteristics, the historical fault data comprising historical fault information and corresponding historical diagnosis results (702);
performing, by the classification algorithm, text classification on the historical fault information (704) to obtain different categories of historical fault information;
based on the different categories of historical fault information, the historical fault related characteristics, and the historical diagnosis results, training the deep neural network model (706) to so as determine a preferred parameter for the deep neural network model; and
selecting a preferred model using the preferred parameter, as the fault analysis model.

8. The method according to claim 7, wherein the classification algorithm is a Bidirectional Encoder Representations from Transformers (BERT) algorithm, and wherein the fault diagnosis result comprises at least one of the following: result characteristics related to the fault to be diagnosed, at least one cause of the fault to be diagnosed, and a probability of each cause.

9. The method according to claim 8, further comprising:
storing the fault diagnosis result in the database and/or providing the fault diagnosis result to the deep neural network model to retrain the deep neural network model.

10. The method according to claim 9, wherein the operation of providing the fault diagnosis result to the deep neural network model to retrain the deep neural network model further comprises: providing to the deep neural network model the result characteristics as updated historical fault related characteristics so as to retrain the deep neural network model.

11. The method according to claim 1, wherein the model for classification is a XGBoost model, and wherein the fault analysis model is further determined based on the following operations:
obtaining the historical fault data and the historical fault related characteristics (1102), the historical fault data comprising historical fault information and corresponding historical diagnosis results;
using the historical fault information, the historical fault related characteristics, and the historical diagnosis results to train the XGBoost model (1104), so as to determine a preferred parameter for the XGBoost model; and
selecting a preferred model using the preferred parameter, as the fault analysis model.

12. The method according to claim 11, wherein the fault diagnosis result comprises at least one of the following: result characteristics related to a category of the fault to be diagnosed, at least one cause of the fault to be diagnosed, and a probability of each cause.

13. The method according to claim 12, further comprising:
storing the fault diagnosis result in the database and/or providing the fault diagnosis result to the XGBoost model to retrain the XGBoost model.

14. The method according to claim 13, wherein the operation of providing the fault diagnosis result to the XGBoost model to retrain the XGBoost model further comprises: providing the result characteristics to the XGBoost model as updated historical fault related characteristics so as to retrain the XGBoost model.

15. A device for analyzing vehicle faults (1300), comprising:
a receiving module (1302) configured to receive fault information to be diagnosed wherein the fault information to be diagnosed refers to information related to a fault to be diagnosed when a vehicle occurs fault;
an obtaining module (1304) configured to obtain, from a database, predetermined parameters corresponding to a classification result of a fault to be diagnosed, which is indicated in the fault information to be diagnosed;
a processing module (1306) configured to process, by a fault analysis model, the fault information to be diagnosed and the predetermined parameters, wherein the fault analysis model is a preferred model determined by training a model for classification using historical fault data and historical fault related characteristics based on a classification algorithm, the device being **characterized in that** the preferred model is determined by:
determining a parameter, when a deviation between a predicted result generated for a historical fault in the historical fault data and a diagnosis real result detected for the historical fault is less than a threshold, as a preferred parameter, and determining a model using the preferred parameter as a preferred model; and
a generating module (1308) configured to generate a fault diagnosis result for the fault to be diagnosed.

16. The device according to claim 15, wherein the model for classification is a fusion model, the fusion model comprises a random forest model, an AdaBoost model, and a Support Vector Machine (SVM) model, and wherein the fault analysis model is further determined based on the following operations:
obtaining the historical fault data and the historical fault related characteristics, the historical fault data comprising historical fault information and corresponding historical diagnosis results;
performing, by the classification algorithm, text classification on the historical fault information to obtain different categories of historical fault information;
based on the different categories of historical fault information, the historical fault related characteristics, and the historical diagnosis results, training the fusion model to obtain a preferred parameter for the fusion model; and
selecting a fusion preferred model using the preferred parameter, as the fault analysis model.

17. The device according to claim 16, wherein the classification algorithm is a Bidirectional Encoder Representations from Transformers (BERT) algorithm, and wherein training the fusion model further comprises the following operations:
based on the different categories of historical fault information, the historical fault related characteristics, and the historical diagnosis results, training the random forest model and the AdaBoost model to respectively determine a preferred parameter for the random forest model and a preferred parameter for the AdaBoost model;
with the random forest model and the AdaBoost model that respectively use the determined preferred parameters as base models, training the SVM model to determine a preferred parameter for the SVM model; and
based on the preferred parameter of the random forest model, the preferred parameter of the AdaBoost model, and the preferred parameter of the SVM model, determining the preferred parameter for the fusion model.

18. The device according to claim 16, wherein the fault diagnosis result comprises at least one of the following: result characteristics related to the fault to be diagnosed, at least one cause of the fault to be diagnosed, and a probability of each cause.

19. The device according to claim 18, further comprising:
a storing module configured to store the fault diagnosis result in the database; and/or a providing module configured to provide the fault diagnosis result to the fusion model to retrain the fusion model.

20. The device according to claim 19, wherein the providing module is further configured to provide to the fusion model the result characteristics as updated historical fault related characteristics so as to retrain the fusion model.

21. The device according to claim 15, wherein the model for classification is a deep neural network mode, and wherein the fault analysis model is further determined based on the following operations:
obtaining the historical fault data and the historical fault related characteristics, the historical fault data comprising historical fault information and corresponding historical diagnosis results;
performing, by the classification algorithm, text classification on the historical fault information to obtain different categories of historical fault information;
based on the different categories of historical fault information, the historical fault related characteristics, and the historical diagnosis results, training the deep neural network model so as to determine a preferred parameter for the deep neural network model; and
selecting a preferred model using the preferred parameter, as the fault analysis model.

22. The device according to claim 21, wherein the classification algorithm is a Bidirectional Encoder Representations from Transformers (BERT) algorithm, and wherein the fault diagnosis result comprises at least one of the following: result characteristics related to the fault to be diagnosed, at least one cause of the fault to be diagnosed, and a probability of each cause.

23. The device according to claim 22, further comprising:
a storing module configured to store the fault diagnosis result in the database; and/or
a providing module configured to provide the fault diagnosis result to the deep neural network model to retrain the deep neural network model.

24. The device according to claim 23, wherein the providing module is further configured to provide the result characteristics to the deep neural network model as updated historical fault related characteristics so as to retrain the deep neural network model.

25. The device according to claim 15, wherein the model for classification is an XGBoost model, and wherein the fault analysis model is further determined based on the following operations:
obtaining the historical fault data and the historical fault related characteristics, the historical fault data comprising historical fault information and corresponding historical diagnosis results;
using the historical fault information, the historical fault related characteristics, and the historical diagnosis results to train the XGBoost model, so as to determine a preferred parameter for the XGBoost model; and
selecting a preferred model using the preferred parameter, as the fault analysis model.

26. The device according to claim 25, wherein the fault diagnosis result comprises at least one of the following: result characteristics related to a category of the fault to be diagnosed, at least one cause of the fault to be diagnosed, and a probability of each cause.

27. The device according to claim 26, further comprising:
a storing module configured to store the fault diagnosis result in the database; and/or
a providing module configured to provide the fault diagnosis result to the XGBoost model to retrain the XGBoost model.

28. The device according to claim 27, wherein the providing module is further configured to provide the result characteristics to the XGBoost model as updated historical fault related characteristics so as to retrain the XGBoost model.

29. An apparatus for analyzing vehicle faults (1400), comprising:
a processor (1402); and
a memory (1404) configured to store an executable instruction, wherein the executable instruction, when executed, causes the processor to perform the method according to claims 1 to 14.

30. A machine-readable medium with an executable instruction stored thereon, wherein the executable instruction, when executed, causes a machine to perform the method according to claims 1 to 14.

## Patentansprüche

1. Verfahren zum Analysieren von Fahrzeugfehlern (1200), umfassend:
Empfangen von zu diagnostizierenden Fehlerinformationen (1202), wobei sich die zu diagnostizierenden Fehlerinformationen auf Informationen beziehen, die einen zu diagnostizierenden Fehler im Falle eines Fahrzeugsfehlers betreffen;
Abrufen, aus einer Datenbank, von vordefinierten Parametern, die einem Klassifikationsergebnis eines zu diagnostizierenden Fehlers entsprechen (1204), welcher in den zu diagnostizierenden Fehlerinformationen angezeigt wird;
Verarbeiten der zu diagnostizierenden Fehlerinformationen und der vordefinierten Parameter durch ein Fehleranalysemodell, wobei das Fehleranalysemodell ein bevorzugtes Modell ist, das durch Training eines Modells zur Klassifizierung unter Verwendung von historischen Fehlerdaten und historischen fehlerbezogenen Eigenschaften anhand eines Klassifikationsalgorithmus bestimmt wird, wobei das Verfahren **dadurch gekennzeichnet ist, dass** das bevorzugte Modell wie folgt bestimmt wird: Bestimmen eines Parameters als bevorzugter Parameter, wenn eine Abweichung zwischen einem für einen historischen Fehler in den historischen Fehlerdaten erzeugten vorhergesagten Ergebnis und einem für den historischen Fehler ermittelten tatsächlichen Diagnoseergebnis kleiner als ein Schwellenwert ist, und Bestimmen eines Modells, das den bevorzugten Parameter benutzt, als das bevorzugte Modell; und
Erzeugen eines Fehlerdiagnoseergebnises für den zu diagnostizierenden Fehler (1208).

2. Verfahren nach Anspruch 1, wobei das Modell zur Klassifizierung ein Fusionsmodell ist, das ein Random-Forest-Modell, ein AdaBoost-Modell und ein Support Vector Machine (SVM)-Modell umfasst, und wobei das Fehleranalysemodell ferner basierend auf folgenden Operationen bestimmt wird:
Abrufen der historischen Fehlerdaten und der historischen fehlerbezogenen Eigenschaften (302), wobei die historischen Fehlerdaten historische Fehlerinformationen und entsprechende historische Diagnoseergebnisse umfassen;
Durchführen einer Textklassifikation auf den historischen Fehlerinformationen mittels des Klassifikationsalgorithmus, um unterschiedliche Kategorien historischer Fehlerinformationen zu ermitteln (304);
Trainieren des Fusionsmodells auf der Grundlage der unterschiedlichen Kategorien historischer Fehlerinformationen, der historischen fehlerbezogenen Eigenschaften, und der historischen Diagnoseergebnisse, um einen bevorzugten Parameter für das Fusionsmodell zu bestimmen; und
Auswählen eines für Fusion bevorzugten Modells, das den bevorzugten Parameter benutzt, als das Fehleranalysemodell.

3. Verfahren nach Anspruch 2, wobei der Klassifikationsalgorithmus ein Bidirectional Encoder Representations from Transformers (BERT)-Algorithmus ist und wobei das Trainieren des Fusionsmodells ferner folgende Operationen umfasst:
Trainieren des Random-Forest-Modells und des AdaBoost-Modells auf der Grundlage der unterschiedlichen Kategorien historischer Fehlerinformationen, der historischen fehlerbezogenen Eigenschaften, und der historischen Diagnoseergebnisse, um jeweils einen bevorzugten Parameter für das Random-Forest-Modell und einen bevorzugten Parameter für das AdaBoost-Modell zu bestimmen (306);
Trainieren des SVM-Modells unter Verwendung des Random-Forest-Modells und des AdaBoost-Modells, die jeweils die bestimmten bevorzugten Parameter benutzen, als Basismodelle, um einen bevorzugten Parameter für das SVM-Modell zu bestimmen; und
Bestimmen des bevorzugten Parameters für das Fusionsmodell auf der Grundlage des bevorzugten Parameters des Random-Forest-Modells, des bevorzugten Parameters des AdaBoost-Modells, und des bevorzugten Parameters des SVM-Modells (308.

4. Verfahren nach Anspruch 2, wobei das Fehlerdiagnoseergebnis mindestens eine der Folgenden umfasst: Ergebniseigenschaften in Bezug auf den zu diagnostizierenden Fehler, mindestens eine Ursache des zu diagnostizierenden Fehlers, und eine Wahrscheinlichkeit für jede Ursache.

5. Verfahren nach Anspruch 4, ferner umfassend:
Speichern des Fehlerdiagnoseergebnisses in der Datenbank und/oder Bereitstellen des Fehlerdiagnoseergebnisses an das Fusionsmodell, um das Fusionsmodell erneut zu trainieren.

6. Verfahren nach Anspruch 5, wobei das Bereitstellen des Fehlerdiagnoseergebnisses an das Fusionsmodell, um das Fusionsmodell erneut zu trainieren, ferner umfasst: Bereitstellen der Ergebniseigenschaften als aktualisierte, historische, fehlerbezogene Eigenschaften an das Fusionsmodell, um das Fusionsmodell erneut zu trainieren.

7. Verfahren nach Anspruch 1, wobei das Modell zur Klassifizierung ein tiefes Neuronalnetzwerkmodell ist, und wobei das Fehleranalysemodell ferner basierend auf folgenden Operationen bestimmt wird:
Abrufen der historischen Fehlerdaten und der historischen fehlerbezogenen Eigenschaften, wobei die historischen Fehlerdaten historische Fehlerinformationen und entsprechende historische Diagnoseergebnisse umfassen (702);
Durchführen einer Textklassifikation auf den historischen Fehlerinformationen mittels des Klassifikationsalgorithmus (704), um unterschiedliche Kategorien historischer Fehlerinformationen zu ermitteln;
Trainieren des tiefen Neuronalnetzwerkmodells auf der Grundlage der unterschiedlichen Kategorien historischer Fehlerinformationen, der historischen fehlerbezogenen Eigenschaften, und der historischen Diagnoseergebnisse (706), um einen bevorzugten Parameter für das tiefe Neuronalnetzwerkmodell zu bestimmen; und
Auswählen eines bevorzugten Modells, das den bevorzugten Parameter benutzt, als das Fehleranalysemodell.

8. Verfahren nach Anspruch 7, wobei der Klassifikationsalgorithmus ein Bidirectional Encoder Representations from Transformers (BERT)-Algorithmus ist, und wobei das Fehlerdiagnoseergebnis mindestens eine der Folgenden umfasst: Ergebniseigenschaften in Bezug auf den zu diagnostizierenden Fehler, mindestens eine Ursache des zu diagnostizierenden Fehlers, und eine Wahrscheinlichkeit für jede Ursache.

9. Verfahren nach Anspruch 8, ferner umfassend:
Speichern des Fehlerdiagnoseergebnisses in der Datenbank und/oder Bereitstellen des Fehlerdiagnoseergebnisses an das tiefe Neuronalnetzwerkmodell, um das tiefe Neuronalnetzwerkmodell erneut zu trainieren.

10. Verfahren nach Anspruch 9, wobei das Bereitstellen des Fehlerdiagnoseergebnisses an das tiefe Neuronalnetzwerkmodell, um das tiefe Neuronalnetzwerkmodell erneut zu trainieren, ferner umfasst: Bereitstellen der Ergebniseigenschaften als aktualisierte, historische, fehlerbezogene Eigenschaften an das tiefe Neuronalnetzwerkmodell, um das tiefe Neuronalnetzwerkmodell erneut zu trainieren.

11. Verfahren nach Anspruch 1, wobei das Modell zur Klassifizierung ein XGBoost-Modell ist, und wobei das Fehleranalysemodell ferner basierend auf folgenden Operationen bestimmt wird:
Abrufen der historischen Fehlerdaten und der historischen fehlerbezogenen Eigenschaften (1102), wobei die historischen Fehlerdaten historische Fehlerinformationen und entsprechende historische Diagnoseergebnisse umfassen;
Trainieren des XGBoost-Modells mit den historischen Fehlerinformationen, den historischen fehlerbezogenen Eigenschaften, und den historischen Diagnoseergebnissen (1104), um einen bevorzugten Parameter für das XGBoost-Modell zu bestimmen; und
Auswählen eines bevorzugten Modells, das den bevorzugten Parameter benutzt, als das Fehleranalysemodell.

12. Verfahren nach Anspruch 11, wobei das Fehlerdiagnoseergebnis mindestens eine der Folgenden umfasst: Ergebniseigenschaften in Bezug auf eine Kategorie des zu diagnostizierenden Fehlers, mindestens eine Ursache des zu diagnostizierenden Fehlers, und eine Wahrscheinlichkeit für jede Ursache.

13. Verfahren nach Anspruch 12, ferner umfassend:
Speichern des Fehlerdiagnoseergebnisses in der Datenbank und/oder Bereitstellen des Fehlerdiagnoseergebnisses an das XGBoost-Modell, um das XGBoost-Modell erneut zu trainieren.

14. Verfahren nach Anspruch 13, wobei das Bereitstellen des Fehlerdiagnoseergebnisses an das XGBoost-Modell, um das XGBoost-Modell erneut zu trainieren, ferner umfasst: Bereitstellen der Ergebniseigenschaften als aktualisierte, historische, fehlerbezogene Eigenschaften an das XGBoost-Modell, um das XGBoost-Modell erneut zu trainieren.

15. Vorrichtung zum Analysieren von Fahrzeugfehlern (1300), umfassend:
ein Empfangsmodul (1302), eingerichtet zum Empfangen von zu diagnostizierenden Fehlerinformationen, wobei sich die zu diagnostizierenden Fehlerinformationen auf Informationen beziehen, die einen zu diagnostizierenden Fehler im Falle eines Fahrzeugsfehlers betreffen;
ein Abrufmodul (1304), eingerichtet zum Abrufen, aus einer Datenbank, von vordefinierten Parametern, die einem Klassifikationsergebnis eines zu diagnostizierenden Fehlers entsprechen, welcher in den zu diagnostizierenden Fehlerinformationen angezeigt wird;
ein Verarbeitungsmodul (1306), eingerichtet zum Verarbeiten der zu diagnostizierenden Fehlerinformationen und der vordefinierten Parameter durch ein Fehleranalysemodell, wobei das Fehleranalysemodell ein bevorzugtes Modell ist, das durch Training eines Modells zur Klassifizierung unter Verwendung von historischen Fehlerdaten und historischen fehlerbezogenen Eigenschaften anhand eines Klassifikationsalgorithmus bestimmt wird, wobei die Vorrichtung **dadurch gekennzeichnet ist, dass** das bevorzugte Modell wie folgt bestimmt wird: Bestimmen eines Parameters als bevorzugter Parameter, wenn eine Abweichung zwischen einem für einen historischen Fehler in den historischen Fehlerdaten erzeugten vorhergesagten Ergebnis und einem für den historischen Fehler ermittelten tatsächlichen Diagnoseergebnis kleiner als ein Schwellenwert ist, und Bestimmen eines Modells, das den bevorzugten Parameter benutzt, als bevorzugtes Modell; und
ein Erzeugungsmodul (1308), eingerichtet zum Erzeugen eines Fehlerdiagnoseergebnises für den zu diagnostizierenden Fehler.

16. Vorrichtung nach Anspruch 15, wobei das Modell zur Klassifizierung ein Fusionsmodell ist, das ein Random-Forest-Modell, ein AdaBoost-Modell, und ein Support Vector Machine (SVM)-Modell umfasst, und wobei das Fehleranalysemodell ferner basierend auf folgenden Operationen bestimmt wird:
Abrufen der historischen Fehlerdaten und der historischen fehlerbezogenen Eigenschaften, wobei die historischen Fehlerdaten historische Fehlerinformationen und entsprechende historische Diagnoseergebnisse umfassen;
Durchführen einer Textklassifikation auf den historischen Fehlerinformationen mittels des Klassifikationsalgorithmus, um unterschiedliche Kategorien historischer Fehlerinformationen zu ermitteln;
Trainieren des Fusionsmodells auf der Grundlage der unterschiedlichen Kategorien historischer Fehlerinformationen, der historischen fehlerbezogenen Eigenschaften, und der historischen Diagnoseergebnisse, um einen bevorzugten Parameter für das Fusionsmodell zu bestimmen; und
Auswählen eines für Fusion bevorzugten Modells, das den bevorzugten Parameter benutzt, als das Fehleranalysemodell.

17. Vorrichtung nach Anspruch 16, wobei der Klassifikationsalgorithmus ein Bidirectional Encoder Representations from Transformers (BERT)-Algorithmus ist, und wobei das Trainieren des Fusionsmodells ferner folgende Operationen umfasst:
Trainieren des Random-Forest-Modells und des AdaBoost-Modells auf der Grundlage der unterschiedlichen Kategorien historischer Fehlerinformationen, der historischen fehlerbezogenen Eigenschaften, und der historischen Diagnoseergebnissen, um jeweils einen bevorzugten Parameter für das Random-Forest-Modell und einen bevorzugten Parameter für das AdaBoost-Modell zu bestimmen;
Trainieren des SVM-Modells unter Verwendung des Random-Forest-Modells und des AdaBoost-Modells, die jeweils die bestimmten bevorzugten Parameter benutzen, als Basismodelle, um einen bevorzugten Parameter für das SVM-Modell zu bestimmen; und
Bestimmen des bevorzugten Parameters für das Fusionsmodell auf der Grundlage des bevorzugten Parameters des Random-Forest-Modells, des bevorzugten Parameters des AdaBoost-Modells, und des bevorzugten Parameters des SVM-Modells.

18. Vorrichtung nach Anspruch 16, wobei das Fehlerdiagnoseergebnis mindestens eine der Folgenden umfasst: Ergebniseigenschaften in Bezug auf den zu diagnostizierenden Fehler, mindestens eine Ursache des zu diagnostizierenden Fehlers und eine Wahrscheinlichkeit für jede Ursache.

19. Vorrichtung nach Anspruch 18, ferner umfassend:
ein Speichermodul, eingerichtet zum Speichern des Fehlerdiagnoseergebnisses in der Datenbank; und/oder
ein Bereitstellungsmodul, eingerichtet zum Bereitstellen des Fehlerdiagnoseergebnisses an das Fusionsmodell, um das Fusionsmodell erneut zu trainieren.

20. Vorrichtung nach Anspruch 19, wobei das Bereitstellungsmodul ferner eingerichtet ist, die Ergebniseigenschaften als aktualisierte, historische, fehlerbezogene Eigenschaften an das Fusionsmodell bereitzustellen, um das Fusionsmodell erneut zu trainieren.

21. Vorrichtung nach Anspruch 15, wobei das Modell zur Klassifizierung ein tiefes Neuronalnetzwerkmodell ist, und wobei das Fehleranalysemodell ferner basierend auf folgenden Operationen bestimmt wird:
Abrufen der historischen Fehlerdaten und der historischen fehlerbezogenen Eigenschaften, wobei die historischen Fehlerdaten historische Fehlerinformationen und entsprechende historische Diagnoseergebnisse umfassen;
Durchführen einer Textklassifikation auf den historischen Fehlerinformationen mittels des Klassifikationsalgorithmus, um unterschiedliche Kategorien historischer Fehlerinformationen zu ermitteln;
Trainieren des tiefen Neuronalnetzwerkmodells auf der Grundlage der unterschiedlichen Kategorien historischer Fehlerinformationen, der historischen fehlerbezogenen Eigenschaften, und der historischen Diagnoseergebnisse, um einen bevorzugten Parameter für das tiefe Neuronalnetzwerkmodell zu bestimmen; und
Auswählen eines bevorzugten Modells, das den bevorzugten Parameter benutzt, als das Fehleranalysemodell.

22. Vorrichtung nach Anspruch 21, wobei der Klassifikationsalgorithmus ein Bidirectional Encoder Representations from Transformers (BERT)-Algorithmus ist, und wobei das Fehlerdiagnoseergebnis mindestens eine der Folgenden umfasst: Ergebniseigenschaften in Bezug auf den zu diagnostizierenden Fehler, mindestens eine Ursache des zu diagnostizierenden Fehlers, und eine Wahrscheinlichkeit für jede Ursache.

23. Vorrichtung nach Anspruch 22, ferner umfassend:
ein Speichermodul, eingerichtet zum Speichern des Fehlerdiagnoseergebnisses in der Datenbank; und/oder
ein Bereitstellungsmodul, eingerichtet zum Bereitstellen des Fehlerdiagnoseergebnisses an das tiefe Neuronalnetzwerkmodell, um das tiefe Neuronalnetzwerkmodell erneut zu trainieren.

24. Vorrichtung nach Anspruch 23, wobei das Bereitstellungsmodul ferner eingerichtet ist, die Ergebniseigenschaften als aktualisierte, historische, fehlerbezogene Eigenschaften an das tiefe Neuronalnetzwerkmodell bereitzustellen, um das tiefe Neuronalnetzwerkmodell erneut zu trainieren.

25. Vorrichtung nach Anspruch 15, wobei das Modell zur Klassifizierung ein XGBoost-Modell ist, und wobei das Fehleranalysemodell ferner basierend auf folgenden Operationen bestimmt wird:
Abrufen der historischen Fehlerdaten und der historischen fehlerbezogenen Eigenschaften, wobei die historischen Fehlerdaten historische Fehlerinformationen und entsprechende historische Diagnoseergebnisse umfassen;
Trainieren des XGBoost-Modells mit den historischen Fehlerinformationen, den historischen fehlerbezogenen Eigenschaften, und den historischen Diagnoseergebnisse, um einen bevorzugten Parameter für das XGBoost-Modell zu bestimmen; und
Auswählen eines bevorzugten Modells, das den bevorzugten Parameter benutzt, als das Fehleranalysemodell.

26. Vorrichtung nach Anspruch 25, wobei das Fehlerdiagnoseergebnis mindestens eine der Folgenden umfasst: Ergebniseigenschaften in Bezug auf eine Kategorie des zu diagnostizierenden Fehlers, mindestens eine Ursache des zu diagnostizierenden Fehlers, und eine Wahrscheinlichkeit für jede Ursache.

27. Vorrichtung nach Anspruch 26, ferner umfassend:
ein Speichermodul, eingerichtet zum Speichern des Fehlerdiagnoseergebnisses in der Datenbank; und/oder
ein Bereitstellungsmodul, eingerichtet zum Bereitstellen des Fehlerdiagnoseergebnisses an das XGBoost-Modell, um das XGBoost-Modell erneut zu trainieren.

28. Vorrichtung nach Anspruch 27, wobei das Bereitstellungsmodul ferner eingerichtet ist, die Ergebniseigenschaften als aktualisierte, historische, fehlerbezogene Eigenschaften an das XGBoost-Modell bereitzustellen, um das XGBoost-Modell erneut zu trainieren.

29. Einrichtung zum Analysieren von Fahrzeugfehlern (1400), umfassend:
einen Prozessor (1402), und
einen Speicher (1404), eingerichtet zum Speichern eines ausführbaren Befehls, wobei der ausführbare Befehl bei Ausführung den Prozessor veranlasst, das Verfahren nach Ansprüchen 1 bis 14 auszuführen.

30. Maschinenlesbares Medium, auf dem ein ausführbarer Befehl gespeichert ist, wobei der ausführbare Befehl bei Ausführung eine Maschine veranlasst, das Verfahren nach Ansprüchen 1 bis 14 auszuführen.

## Revendications

1. Procédé d'analyse de pannes de véhicule (1200), comprenant :
la réception d'informations de panne à diagnostiquer (1202), dans lequel les informations de panne à diagnostiquer concernent des informations relatives à une panne à diagnostiquer lorsqu'un véhicule connaît une panne ;
l'obtention, à partir d'une base de données, de paramètres prédéterminés correspondant à un résultat de classification d'une panne à diagnostiquer (1204), qui est indiqué dans les informations de panne à diagnostiquer ;
le traitement, par un modèle d'analyse de panne, des informations de panne à diagnostiquer et des paramètres prédéterminés, dans lequel le modèle d'analyse de panne est un modèle préféré déterminé par l'entraînement du modèle de classification en utilisant des données de pannes historiques et des caractéristiques relatives aux pannes historiques sur la base d'un algorithme de classification, le procédé étant **caractérisé en ce que** le modèle préféré est déterminé : en déterminant un paramètre, lorsqu'un écart entre un résultat prédit généré pour une panne historique dans les données de pannes historiques et un résultat réel de diagnostic détecté pour la panne historique est inférieur à un seuil, comme paramètre préféré, et en déterminant un modèle utilisant le paramètre préféré comme modèle préféré ; et
la génération d'un résultat de diagnostic de panne pour la panne à diagnostiquer (1208).

2. Procédé selon la revendication 1, dans lequel le modèle de classification est un modèle de fusion, le modèle de fusion comprenant un modèle de forêt aléatoire, un modèle AdaBoost, et un modèle de machine à vecteurs de support (SVM), et dans lequel le modèle d'analyse de panne est en outre déterminé sur la base des opérations suivantes :
l'obtention des données de pannes historiques et des caractéristiques relatives aux pannes historiques (302), les données de pannes historiques comprenant des informations de pannes historiques et des résultats de diagnostic historiques correspondants ;
la réalisation, par l'algorithme de classification, d'une classification de texte sur les informations de pannes historiques pour obtenir différentes catégories d'informations de pannes historiques (304) ;
sur la base des différentes catégories d'informations de pannes historiques, des caractéristiques relatives aux pannes historiques, et des résultats de diagnostic historiques, l'entraînement du modèle de fusion pour obtenir un paramètre préféré pour le modèle de fusion ; et
la sélection d'un modèle préféré de fusion en utilisant le paramètre préféré, comme modèle d'analyse de panne.

3. Procédé selon la revendication 2, dans lequel l'algorithme de classification est une représentation d'encodeur bidirectionnel à partir d'un algorithme de transformateurs (BERT), et dans lequel l'entraînement du modèle de fusion comprend en outre les opérations suivantes :
sur la base des différentes catégories d'informations de pannes historiques, des caractéristiques relatives aux pannes historiques, et des résultats de diagnostic historiques, l'entraînement du modèle de forêt aléatoire et du modèle AdaBoost pour déterminer respectivement un paramètre préféré pour le modèle de forêt aléatoire et un paramètre préféré pour le modèle AdaBoost (306) ;
avec le modèle de forêt aléatoire et le modèle AdaBoost qui utilisent respectivement les paramètres préférés déterminés comme modèles de base, l'entraînement du modèle SVM pour déterminer un paramètre préféré pour le modèle SVM ; et
sur la base du paramètre préféré du modèle de forêt aléatoire, du paramètre préféré du modèle AdaBoost, et du paramètre préféré du modèle SVM, la détermination du paramètre préféré pour le modèle de fusion (308.

4. Procédé selon la revendication 2, dans lequel le résultat de diagnostic de panne comprend au moins l'un des éléments suivants : des caractéristiques de résultat relatives à la panne à diagnostiquer, au moins une cause de la panne à diagnostiquer, et une probabilité de chaque cause.

5. Procédé selon la revendication 4, comprenant en outre :
le stockage du résultat de diagnostic de panne dans la base de données et/ou la fourniture du résultat de diagnostic de panne au modèle de fusion pour ré-entraîner le modèle de fusion.

6. Procédé selon la revendication 5, dans lequel l'opération de fourniture du résultat de diagnostic de panne au modèle de fusion pour ré-entraîner le modèle de fusion comprend en outre : la fourniture au modèle de fusion des caractéristiques de résultat comme caractéristiques mises à jour relatives aux pannes historiques de manière à ré-entraîner le modèle de fusion.

7. Procédé selon la revendication 1, dans lequel le modèle de classification est un modèle de réseau de neurones profond, et dans lequel le modèle d'analyse de panne est en outre déterminé sur la base des opérations suivantes :
l'obtention des données de pannes historiques et des caractéristiques relatives aux pannes historiques, les données de pannes historiques comprenant des informations de pannes historiques et des résultats de diagnostic historiques correspondants (702) ;
la réalisation, par l'algorithme de classification, d'une classification de texte sur les informations de pannes historiques (704) pour obtenir différentes catégories d'informations de pannes historiques ;
sur la base des différentes catégories d'informations de pannes historiques, des caractéristiques relatives aux pannes historiques, et des résultats de diagnostic historiques, l'entraînement du modèle de réseau de neurones profond (706) de manière à déterminer un paramètre préféré pour le modèle de réseau de neurones profond ; et
la sélection d'un modèle préféré en utilisant le paramètre préféré, comme modèle d'analyse de panne.

8. Procédé selon la revendication 7, dans lequel l'algorithme de classification est une représentation d'encodeur bidirectionnel à partir d'un algorithme de transformateurs (BERT), et dans lequel le résultat de diagnostic de panne comprend au moins l'un des éléments suivants : des caractéristiques de résultat relatives à la panne à diagnostiquer, au moins une cause de la panne à diagnostiquer, et une probabilité de chaque cause.

9. Procédé selon la revendication 8, comprenant en outre :
le stockage du résultat de diagnostic de panne dans la base de données et/ou fourniture du résultat de diagnostic de panne au modèle de réseau de neurones profond pour ré-entraîner le modèle de réseau de neurones profond.

10. Procédé selon la revendication 9, dans lequel l'opération de fourniture du résultat de diagnostic de panne au modèle de réseau de neurones profond pour ré-entraîner le modèle de réseau de neurones profond comprend en outre : la fourniture au modèle de réseau de neurones profond des caractéristiques de résultat comme caractéristiques mises à jour relatives aux pannes historiques de manière à ré-entraîner le modèle de réseau de neurones profond.

11. Procédé selon la revendication 1, dans lequel le modèle de classification est un modèle XGBoost, et dans lequel le modèle d'analyse de panne est en outre déterminé sur la base des opérations suivantes :
l'obtention des données de pannes historiques et des caractéristiques relatives aux pannes historiques (1102), les données de pannes historiques comprenant des informations de pannes historiques et des résultats de diagnostic historiques correspondants ;
l'entraînement du modèle XGBoost en utilisant des informations de pannes historiques, des caractéristiques relatives aux pannes historiques et des résultats de diagnostic historiques (1104), de manière à déterminer un paramètre préféré pour le modèle XGBoost ; et
la sélection d'un modèle préféré en utilisant le paramètre préféré, comme modèle d'analyse de panne.

12. Procédé selon la revendication 11, dans lequel le résultat de diagnostic de panne comprend au moins l'un des éléments suivants : des caractéristiques de résultat relatives à une catégorie de la panne à diagnostiquer, au moins une cause de la panne à diagnostiquer, et une probabilité de chaque cause.

13. Procédé selon la revendication 12, comprenant en outre :
le stockage du résultat de diagnostic de panne dans la base de données et/ou la fourniture du résultat de diagnostic de panne au modèle XGBoost pour ré-entraîner le modèle XGBoost.

14. Procédé selon la revendication 13, dans lequel l'opération de fourniture du résultat de diagnostic de panne au modèle XGBoost pour ré-entraîner le modèle XGBoost comprend en outre : la fourniture des caractéristiques de résultat au modèle XGBoost comme caractéristiques mises à jour relatives aux pannes historiques de manière à ré-entraîner le modèle XGBoost.

15. Dispositif d'analyse de pannes de véhicule (1300), comprenant :
un module de réception (1302) configuré pour recevoir des informations de panne à diagnostiquer dans lequel les informations de panne à diagnostiquer concernent des informations relatives à une panne à diagnostiquer lorsqu'un véhicule connaît une panne ;
un module d'obtention (1304) configuré pour obtenir, à partir d'une base de données, des paramètres prédéterminés correspondant à un résultat de classification d'une panne à diagnostiquer, qui est indiqué dans les informations de panne à diagnostiquer ;
un module de traitement (1306) configuré pour traiter, par un modèle d'analyse de panne, les informations de panne à diagnostiquer et les paramètres prédéterminés, dans lequel le modèle d'analyse de panne est un modèle préféré déterminé par l'entraînement du modèle de classification en utilisant des données de pannes historiques et des caractéristiques relatives aux pannes historiques sur la base d'un algorithme de classification, le dispositif étant **caractérisé en ce que** le modèle préféré est déterminé : en déterminant un paramètre, lorsqu'un écart entre un résultat prédit généré pour une panne historique dans les données de pannes historiques et un résultat réel de diagnostic détecté pour la panne historique est inférieur à un seuil, comme paramètre préféré, et en déterminant un modèle utilisant le paramètre préféré comme modèle préféré ; et
un module de génération (1308) configuré pour générer un résultat de diagnostic de panne pour la panne à diagnostiquer.

16. Dispositif selon la revendication 15, dans lequel le modèle de classification est un modèle de fusion, le modèle de fusion comprend un modèle de forêt aléatoire, un modèle AdaBoost, et un modèle de machine à vecteurs de support (SVM), et dans lequel le modèle d'analyse de panne est en outre déterminé sur la base des opérations suivantes :
l'obtention des données de pannes historiques et des caractéristiques relatives aux pannes historiques, les données de pannes historiques comprenant des informations de pannes historiques et des résultats de diagnostics historiques correspondants ;
la réalisation, par l'algorithme de classification, d'une classification de texte sur les informations de pannes historiques pour obtenir différentes catégories d'informations de pannes historiques ;
sur la base des différentes catégories d'informations de pannes historiques, des caractéristiques relatives aux pannes historiques, et des résultats de diagnostic historiques, l'entraînement du modèle de fusion pour obtenir un paramètre préféré pour le modèle de fusion ; et
la sélection d'un modèle préféré de fusion en utilisant le paramètre préféré, comme modèle d'analyse de panne.

17. Dispositif selon la revendication 16, dans lequel l'algorithme de classification est une représentation d'encodeur bidirectionnel à partir d'un algorithme de transformateurs (BERT) et dans lequel l'entraînement du modèle de fusion comprend en outre les opérations suivantes :
sur la base des différentes catégories d'informations de pannes historiques, des caractéristiques relatives aux pannes historiques, et des résultats de diagnostics historiques, l'entraînement du modèle de forêt aléatoire et du modèle AdaBoost pour déterminer respectivement un paramètre préféré pour le modèle de forêt aléatoire et un paramètre préféré pour le modèle AdaBoost ;
avec le modèle de forêt aléatoire et le modèle AdaBoost qui utilisent respectivement les paramètres préférés déterminés comme modèles de base, l'entraînement du modèle SVM pour déterminer un paramètre préféré pour le modèle SVM ; et
sur la base du paramètre préféré du modèle de forêt aléatoire, du paramètre préféré du modèle AdaBoost, et du paramètre préféré du modèle SVM, la détermination du paramètre préféré pour le modèle de fusion.

18. Dispositif selon la revendication 16, dans lequel le résultat de diagnostic de panne comprend au moins l'un des éléments suivants : des caractéristiques de résultat relatives à la panne à diagnostiquer, au moins une cause de la panne à diagnostiquer, et une probabilité de chaque cause.

19. Dispositif selon la revendication 18, comprenant en outre :
un module de stockage configuré pour stocker le résultat de diagnostic de panne dans la base de données ; et/ou
un module de fourniture configuré pour fournir le résultat de diagnostic de panne au modèle de fusion pour ré-entraîner le modèle de fusion.

20. Dispositif selon la revendication 19, dans lequel le module de fourniture est en outre configuré pour fournir au modèle de fusion les caractéristiques de résultats comme caractéristiques mises à jour relatives aux pannes historiques de manière à ré-entraîner le modèle de fusion.

21. Dispositif selon la revendication 15, dans lequel le modèle de classification est un modèle de réseau de neurones profond, et dans lequel le modèle d'analyse de panne est en outre déterminé sur la base des opérations suivantes :
l'obtention des données de pannes historiques et des caractéristiques relatives aux pannes historiques, les données de pannes historiques comprenant des informations de pannes historiques et des résultats de diagnostics historiques correspondants ;
la réalisation, par l'algorithme de classification, d'une classification de texte sur les informations de pannes historiques pour obtenir différentes catégories d'informations de pannes historiques ;
sur la base des différentes catégories d'informations de pannes historiques, des caractéristiques relatives aux pannes historiques, et des résultats de diagnostics historiques, l'entraînement du modèle de réseau de neurones profond de manière à déterminer un paramètre préféré pour le modèle de réseau de neurones profond ; et
la sélection d'un modèle préféré en utilisant le paramètre préféré, comme modèle d'analyse de panne.

22. Dispositif selon la revendication 21, dans lequel l'algorithme de classification est une représentation d'encodeur bidirectionnel à partir d'un algorithme de transformateurs (BERT), et dans lequel le résultat de diagnostic de panne comprend au moins l'un des éléments suivants : des caractéristiques de résultat relatives à la panne à diagnostiquer, au moins une cause de la panne à diagnostiquer, et une probabilité de chaque cause.

23. Dispositif selon la revendication 22, comprenant en outre :
un module de stockage configuré pour stocker le résultat de diagnostic de panne dans la base de données ; et/ou
un module de fourniture configuré pour fournir le résultat de diagnostic de panne au modèle de réseau de neurones profond pour ré-entraîner le modèle de réseau de neurones profond.

24. Dispositif selon la revendication 23, dans lequel le module de fourniture est en outre configuré pour fournir les caractéristiques de résultat au modèle de réseau de neurones profond comme caractéristiques mises à jour relatives aux pannes historiques de manière à ré-entraîner le modèle de réseau de neurones profond.

25. Dispositif selon la revendication 15, dans lequel le modèle de classification est un modèle XGBoost, et dans lequel le modèle d'analyse de panne est en outre déterminé sur la base des opérations suivantes :
l'obtention des données de pannes historiques et des caractéristiques relatives aux pannes historiques, les données de pannes historiques comprenant des informations de pannes historiques et des résultats de diagnostics historiques correspondants ;
l'entraînement du modèle XGBoost en utilisant des informations de pannes historiques, des caractéristiques relatives aux pannes historiques et des résultats de diagnostic historiques, de manière à déterminer un paramètre préféré pour le modèle XGBoost ; et
la sélection d'un modèle préféré en utilisant le paramètre préféré, comme modèle d'analyse de panne.

26. Dispositif selon la revendication 25, dans lequel le résultat de diagnostic de panne comprend au moins l'un des éléments suivants : des caractéristiques de résultat relatives à une catégorie de la panne à diagnostiquer, au moins une cause de la panne à diagnostiquer, et une probabilité de chaque cause.

27. Dispositif selon la revendication 26, comprenant en outre :
un module de stockage configuré pour stocker le résultat de diagnostic de panne dans la base de données ; et/ou
un module de fourniture configuré pour fournir le résultat de diagnostic de panne au modèle XGBoost pour ré-entraîner le modèle XGBoost.

28. Dispositif selon la revendication 27, dans lequel le module de fourniture est en outre configuré pour fournir les caractéristiques de résultat au modèle XGBoost comme caractéristiques mises à jour relatives aux pannes historiques de manière à ré-entraîner le modèle XGBoost.

29. Appareil d'analyse de pannes de véhicule (1400), comprenant :
un processeur (1402) ; et
une mémoire (1404) configurée pour stocker une instruction exécutable, dans lequel l'instruction exécutable, lorsqu'elle est exécutée, amène le processeur à effectuer le procédé selon les revendications 1 à 14.

30. Support lisible par machine avec une instruction exécutable stockée sur celui-ci, dans lequel l'instruction exécutable, lorsqu'elle est exécutée, amène une machine à effectuer le procédé selon les revendications 1 à 14.
